# EUROPEAN PATENT APPLICATION

(11) **EP 2 615 366 A1**
(43) Date of publication of application: **17.07.2013**
(21) Application number: 12151186.9
(22) Date of filing: 14.01.2012
(51) Int. Cl.: F21S 10/00, G09F 9/305, G02B 6/00, F21V 33/00, E01F 9/053, F21W 111/027, F21W 131/301, F21W 111/00, F21W 121/00, F21S 9/03, F21S 8/02

(54) **Lighting device with covering body**

(71) Applicant: Huang, Chih-Chin, Taipei City 105 (TW)
(72) Inventor: Huang, Chih-Chin, Taipei City 105 (TW)
(74) Representative: Blecha, Andreas

(57) **Abstract**

A lighting device with covering body, comprising a covering body and a light guiding member, the covering body has at least one display face, the light guiding member has a light input terminal and a light output terminal, wherein the light guiding member is embedded within the covering body partially or entirely, the light emitted from a light source body is transmitted from the light input terminal to the light output terminal and radiates from the light output terminal on the display face. The light source body not only can be directly electrically connected with an external power source but also can be electrically connected with a storage battery or a solar panel. The power of the light source body can be selected form many kinds of the power supply and can be stored. The light generated from the light source body can be transmitted by the light guiding member to perform the decoration effect of the point-type light on the display surface.

## Description

### FIELD OF THE INVENTION

The present invention relates to a lighting device, and more particularly to a lighting device with covering body.

### BACKGROUND OF THE INVENTION

The conventional large scale of point-type light source, such as incandescent lamps, has disadvantages including uneven light distribution, large power consumption, and over-concentration of heat being generated. Therefore, it is limited in practice and has some bottleneck difficult to overcome. Other application utilizing a plurality of small scale of point lights source, on the other hand, possesses advantages in even light distribution and being able to generate a better display effect, such as generating various patterns and characters. It therefore replaces the conventional large scale point-type light source, especially in application in traffics signs and guideposts. However, considering a plurality of small scale point-type lights such as LEDs being collected together, since each LED itself is a small scale of heat source, it inevitably generates huge amount of energy of heat. As a measure, there always have to arrange heat dissipating devices, such as heat dissipation plates or electric fans, as basic equipments, around these point-type light sources, in order to prevent from device breakdown, which shortens the life period of the device. But this requirement of the dissipating device indirectly limits the design and modification of the products, and thus further limits the competitive strength of the products.

Meanwhile, it usually locates the above lighting device, which is arrayed with the plurality of small scale point-type light sources, within a strong material of outer casing, for protection. However the point-type light sources such as LEDs needs to illuminate light directly outward without being covered for sake of better illumination. Even when the above lighting device is merely covered by a transparent casing, such as glass or a transparent plastic plate, it still has drawbacks that these kinds of transparent casings are fragile without having a good protection and needs more energy to illuminate light through the casings.

### SUMMARY OF THE INVENTION

Considering the drawback of conventional lighting device of large scale point-type light sources and that of lighting device with a plurality of small scale of point-type light sources, an object of the present invention is to provide a lighting device with covering body that overcomes the defects existing in the prior arts.

The present invention overcomes the drawbacks of the prior art, and provides a lighting device with covering body, comprising a covering body and a light guide member, the covering body has at least one display face, the light guiding member has a light input terminal and a light output terminal, wherein the light guiding member is embedded within the covering body partially or entirely, the light emitted from a light source body is transmitted from the light input terminal to the light output terminal and radiates from the light output terminal on the display face.

In a preferred embodiment of the present invention, the covering body is provided with at least one interior space for disposing the light guiding member and/or the light source body therein.

In a preferred embodiment of the present invention, the number of the light input terminals is plural and the light input terminals are concentratedly arranged within a spot area.

In a preferred embodiment of the present invention, the number of the light output terminals is plural and the light output terminals are arranged to form a symbol or a pattern.

In a preferred embodiment of the present invention, the light source body is electrically connected with an external alternating current or with a direct current transformed and rectified from an external alternating current.

In a preferred embodiment of the present invention, the light source body is electrically connected with a storage battery integrated with a power supply managing unit to store a direct current provided by an external power source and to output the energy while the direct current is breaking off.

In a preferred embodiment of the present invention, it further comprises a solar panel connected with the power supply managing unit.

In a preferred embodiment of the present invention, it further comprises a light cover provided on an outer side of the light source body.

In a preferred embodiment of the present invention, the covering body is made of an inflexible hard material.

In a preferred embodiment of the present invention, the light guiding member is provided between the light input terminal and the light output terminal with an optical fiber.

Furthermore, in another preferred embodiment, the present invention overcomes the drawbacks of the prior art, and provides a lighting device with covering body, comprising a covering body and a light guiding member, the covering body has at least one display face, the light guiding member has a light input terminal and a light output terminal, wherein the light guiding member is embedded within the covering body partially or entirely, the light emitted from a light source body is transmitted from the light input terminal to the light output terminal and radiates from the light output terminal on the display face, and the light guiding member and/or the light source body are/is supported by a support member disposed within the covering body partially or entirely.

In another preferred embodiment of the present invention, the covering body is provided with at least one interior space for disposing the light guiding member, the light source body, and the support member therein.

In another preferred embodiment of the present invention, the light source electrically connects with a storage battery integrated with a power supply managing unit to store a direct current provided by an external power source and to output the energy while the direct current is breaking off.

In another preferred embodiment of the present invention, the number of the light output terminals is plural and the light output terminals are arranged to form a symbol or a pattern.

In another preferred embodiment of the present invention, the number of the light input terminals is plural and the light input terminals are concentratedly arranged within a spot area.

By means of technical means of this present invention, because the thermal dispersion in the transmission path of the light of the lighting device with covering body would not occur, it is not necessary to install the heat removal means nearby the display position. So the process of the product manufacture can be simplified to reduce the manufacture cost, and the diversification of the design style can be increased, so that the competitive strength of the product increases. The lighting device with covering body is good in structural strength and the situations that the components of the lighting device with covering body are broken owing the water and the dust can be prevented. The power source of the lighting device with covering body can be selected form many kinds of the power supply so that the lighting device with covering body can be applied more commonly.

### BRIEF DESCRIPTION OF THE DRAWINGS

The structure and the technical means adopted by the present invention to achieve the above and other objects can be best understood by referring to the following detailed description of the preferred embodiments and the accompanying drawings.

Fig. 1 is a stereogram illustrating the first embodiment according to the present invention;
Fig. 2 is an explosion diagram illustrating the first embodiment according to the present invention;
Fig. 3 is a sectional view illustrating the first embodiment according to the present invention;
Fig. 4 is a perspective view illustrating the second embodiment according to the present invention;
Fig. 5 is a partial view illustrating the third embodiment according to the present invention;
Fig. 6 is a sectional view illustrating the fourth embodiment according to the present invention;
Fig. 7 is an application gram illustrating the fifth embodiment according to the present invention;
Fig. 8 is an application gram illustrating the sixth embodiment according to the present invention;
Fig. 9 is an application gram illustrating the seventh embodiment according to the present invention;
Fig. 10 is an application gram illustrating the eighth embodiment according to the present invention;
Fig. 11 is an application gram illustrating the ninth embodiment according to the present invention;
Fig. 12 is an application gram illustrating the tenth embodiment according to the present invention;
Fig. 13 is an application gram illustrating the eleventh embodiment according to the present invention;

### DETAILED DESCRIPTION OF THE PREFERRED EMBODIMENTS

### (The first embodiment)

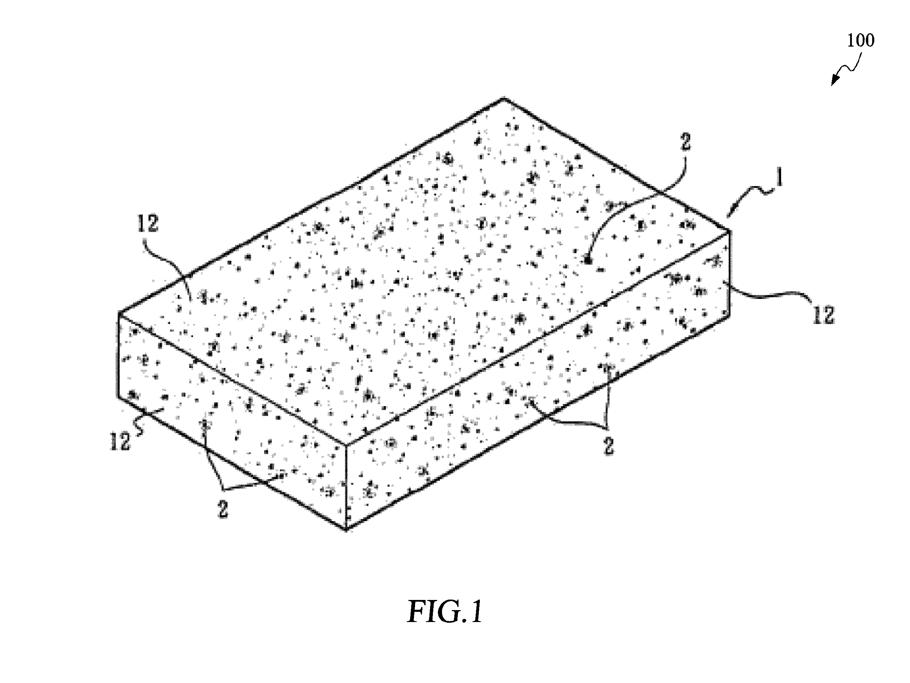

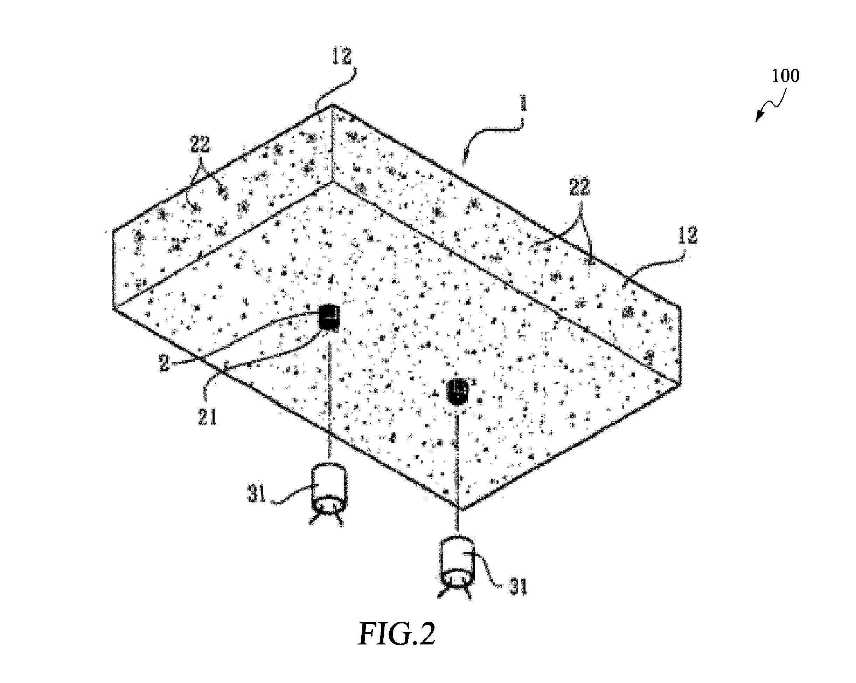

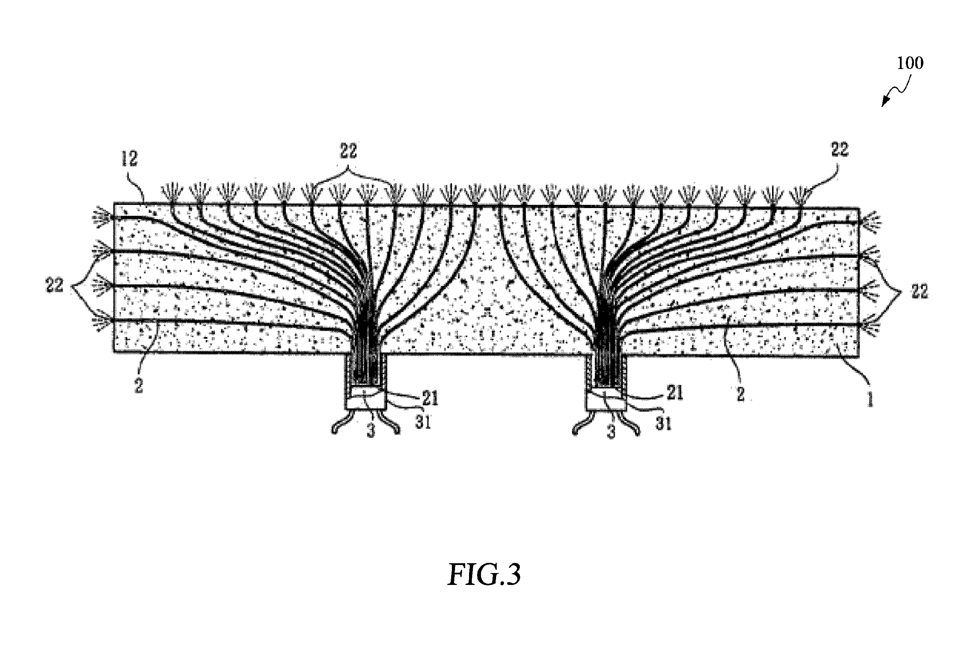

A lighting device with covering body 100 of the present invention is shown in Fig. 1, Fig. 2, and Fig. 3. Fig. 1 is a stereogram illustrating the first embodiment according to the present invention. Fig. 2 is an explosion diagram illustrating the first embodiment according to the present invention. Fig. 3 is a sectional view illustrating the first embodiment according to the present invention. The lighting device with covering body 100 comprises a covering body 1 and a light guiding member 2. In this embodiment, the covering body 1 is made of an inflexible hard material. The covering body 1 can be made of the cement, the soil, or the like. In this embodiment, the light guiding member 2 is a strap-shaped good light conductor. The light guiding member 2 can be made of the optical fiber or the like. The covering body 1 has at least one display face 12, and the light guiding member 2 is embedded within the covering body 1 partially (or entirely). The light guiding member 2 has a light input terminal 21 and a light output terminal 22, wherein a plurality of the light input terminals 21 are concentratedly arranged in a spot area and are out of the surface of the covering body 1, and the light output terminal 22 is provided on the display face 12.

In this embodiment, a light source body 3 is disposed out of the covering body 1 and connects with each light input terminal 21 of the light guiding member 2. A light cover 31 which has light-concentrating effect can be provided on the outer side of the light source body 3 according to the requirement. In this embodiment, the light source body 3 electrically connects with a direct current transformed and rectified from an external alternating current so as to generate the light. The light source body 3 also can electrically connect with an external alternating current to generate the light. The light source body 3 also can directly electrically connect with an external alternating current to generate the light. The light generated by the light source body 3 is transmitted into the light guiding member 2 from the light input terminal 21. Because of the good light-conductive characteristic of the light guiding member 2, the light is almost no attenuation in the transmission process and radiates from the light output terminal 22 to perform the decoration effect of the point-type light arranged regularly or irregularly.

The lighting device with covering body 100 can perform the display effect similar to the effect of a plurality of the LED point lights by arranging a plurality of the light output terminals 22 but no heat loss in the transmission process. Only the light source body 3 needs to dissipate heat. The light source body 3 is not shown on the display face 12 of the covering body 1, so the design of the display face 12 is easier and more flexible. Also, because of the good structural strength and the good isolation effect of the covering body 1, the light guiding member 2 and the light source body 3 can be protected well.

### (The second embodiment)

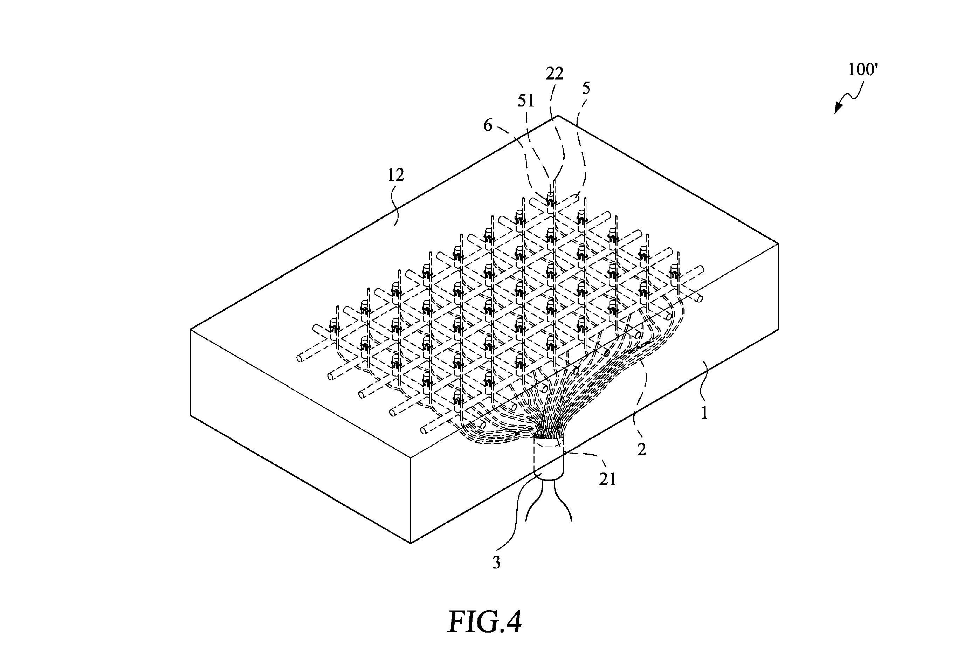

A lighting device with covering body 100' of the present invention is shown in Fig. 4. The elements of this embodiment illustrated in this Fig. are similar to those in the first embodiment. So the same element of both embodiments is indicated with the same symbol. The second embodiment is different from the first embodiment in as follows. In this embodiment, the lighting device with covering body 100' further comprises a support member 5, and the support member 5 is entirely disposed within a covering body 1" and is fixed by the covering body 1". In this embodiment, the support member 5 is a net frame structure, and the support member 5 has a plurality of pillars 51 thereon. The light guiding member 2 is bound or glued with the pillar 51 by a binding element 6 for fixing the light guiding member 2. The light input terminal 21 of the light guiding member 2 is connected with light source body 3, and the light output terminal 22 is provided on the display surface 12 of the covering body 1. The light generated by the light source body 3 is transmitted into the light guiding member 2 from the light input terminal 21 to perform the decoration effect of the point-type light arranged regularly or irregularly on the display surface 12.

### (The third embodiment)

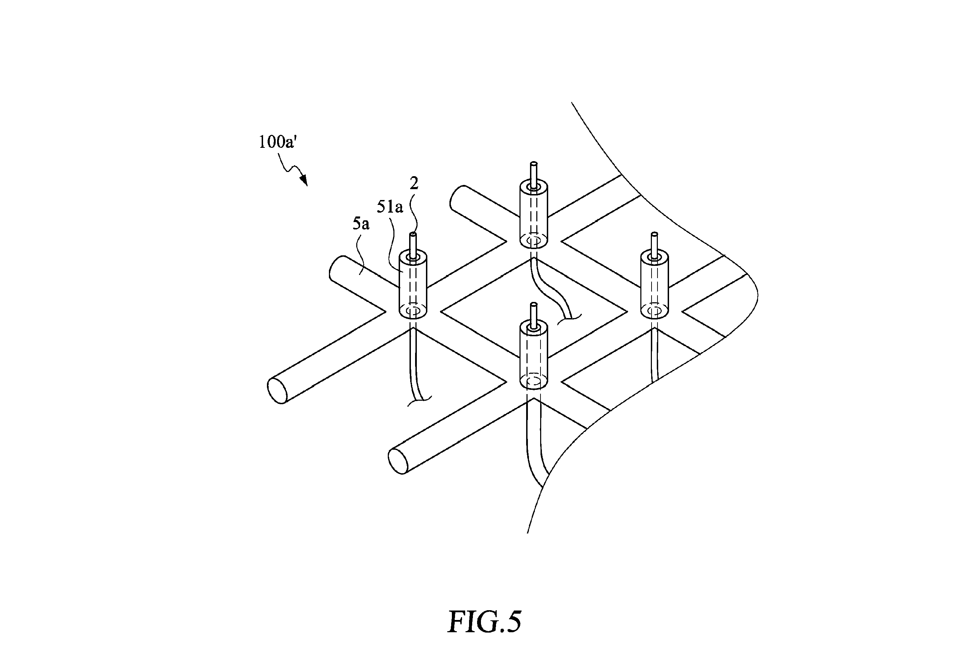

A lighting device with covering body 100a' of the present invention is shown in Fig. 5. The elements of this embodiment illustrated in this Fig. are similar to those in the second embodiment. So the same element of both embodiments is indicated with the same symbol. The third embodiment is different from the second embodiment in as follows. In this embodiment, a support member 5a has a plurality of tube pillars 51a thereon. The light guiding member 2 passes through tube pillar 51a for fixing the light guiding member 2.

### (The fourth embodiment)

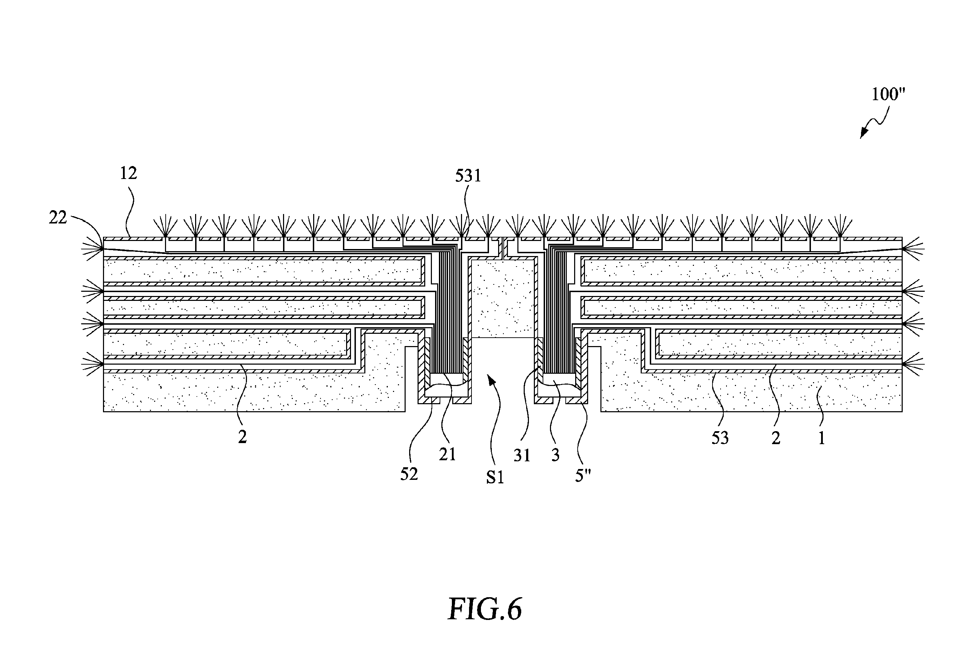

A lighting device with covering body 100" of the present invention is shown in Fig. 6. The elements of this embodiment illustrated in this Fig. are similar to those in the first embodiment. So the same element of both embodiments is indicated with the same symbol. The fourth embodiment is different from the first embodiment in as follows. In this embodiment, an interior space S1 is provided within a covering body 1". A portion of a support member 5" is disposed within the covering body 1" and is fixed by the covering body 1", and another portion of the support member 5" is disposed with the interior space S 1 to support the light source body 3, wherein the light source body 3 is supported by a trough 52 of the support member 5". In this embodiment, the support member 5" is a dendritic tube. The support member 5" has a plurality of branch tubes 53, and the opening 531 of the branch tubes 53 is provided on the display face 12 of the covering body 1". The light guiding member 2 is disposed within the support member 5" so as to be protected by the support member 5". A light input terminal 21 of the light guiding member 2 is connected with the light source body 3, and a light output terminal 22 of the light guiding member 2 is provided at the opening 531. The light emitted form the light source body 3 is transmitted into the light guiding member 2 from the light input terminal 21 to the light output terminal 22 and radiates outward from the light output terminal 22 to perform the decoration effect of the point-type light arranged regularly or irregularly on the display face 12.

In addition to the embodiments mentioned above, the support member also can be a trough structure, a hive-like structure, a bracket structure, or the like, for supporting or protecting the light guiding member.

### (The fifth embodiment)

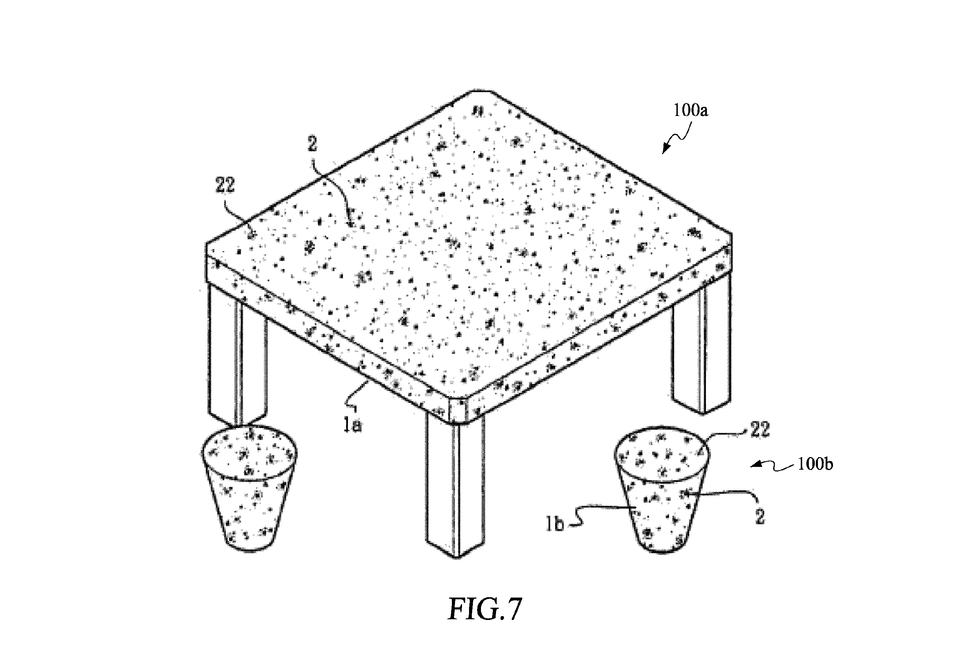

A lighting device with covering body 100a and a lighting device with covering body 100b of the present invention is shown in Fig. 7. The fifth embodiment is an application embodiment by altering the first embodiment (or the second, third, fourth embodiment). In this embodiment, the lighting device with covering body 100a comprises the covering body 1a and the light guiding member 2, wherein the covering body 1a is shaped into a desk. The lighting device with covering body 100b comprising the covering body 1b and the light guiding member 2, wherein the covering body 1b is shaped into a chair. The light guiding member 2 is provided within the covering body 1a and the covering body 1b respectively with the methods as same as those of the first embodiment (or the second, third, fourth embodiment). The light output terminals 22 are distributed on the surface of the covering body 1a and the covering body 1b respectively, so the covering body 1a' 1b not only have the function as a desk or as a chair but also have the decoration effect of the point-type light arranged on the surface thereon.

### (The sixth embodiment)

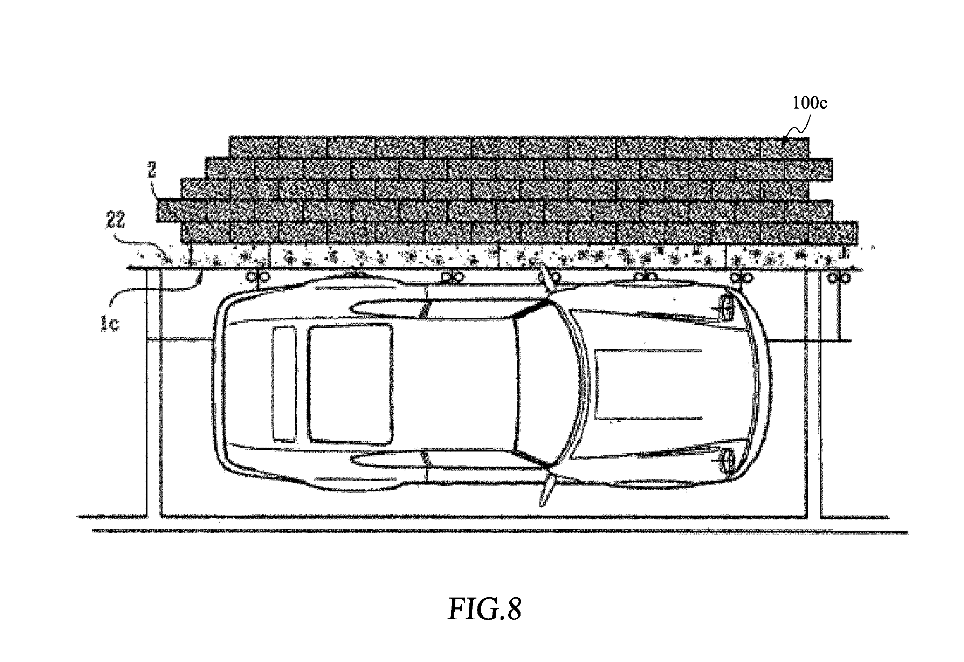

A lighting device with covering body 100c of the present invention is shown in Fig. 8. The sixth embodiment is an application embodiment by altering the first embodiment (or the second, third, fourth embodiment). In this embodiment, the lighting device with covering body 100c comprises the covering body 1c and the light guiding member 2. The covering body 1c can be made to be a convex structure of the edge of the sidewalk nearby the road. The light guiding member 2 is provided within the covering body 1c with the methods as same as those of the first embodiment (or the second, third, fourth embodiment). The light output terminals 22 are distributed on the surface of the covering body 1c, so the covering body 1c not only has a light-distributed surface to divide the sidewalk and the road so as to reduce the traffic accident but also forms the decoration on the roadside to make the street more vivid.

### (The seventh embodiment)

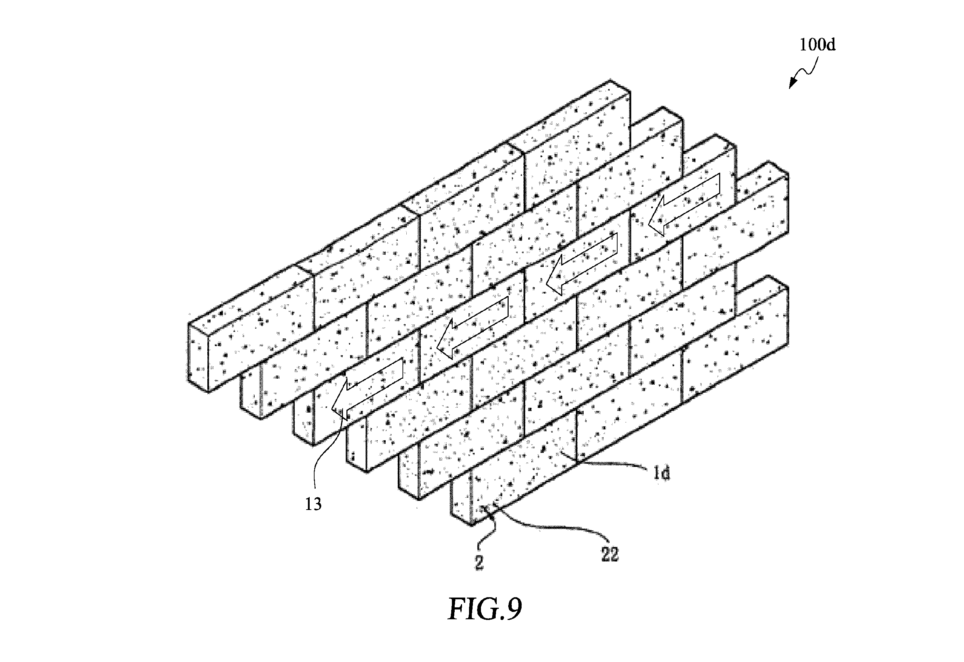

A lighting device with covering body 100d and a lighting device with covering body 100b of the present invention is shown in Fig. 9. The seventh embodiment is an application embodiment by altering the first embodiment (or the second, third, fourth embodiment). In this embodiment, the lighting device with covering body 100d comprises the covering body 1d and the light guiding member 2. The covering body 1c can be made to be a wall brick. The light guiding member 2 is provided within the covering body 1d with the methods as same as those of the first embodiment (or the second, third, fourth embodiment). The light output terminals 22 are arranged to form a symbol or a pattern on the particular position distributed on the surface of the covering body 1d according the requirement. In this embodiment, a plurality of the covering bodies 1d are stacked to form a wall, and the light output terminals 22 are arranged to form a symbol 13 (or to form a pattern). The symbol 13 (or the pattern) can be a guide, sign, or a warning to increase the function of the wall.

### (The eighth embodiment)

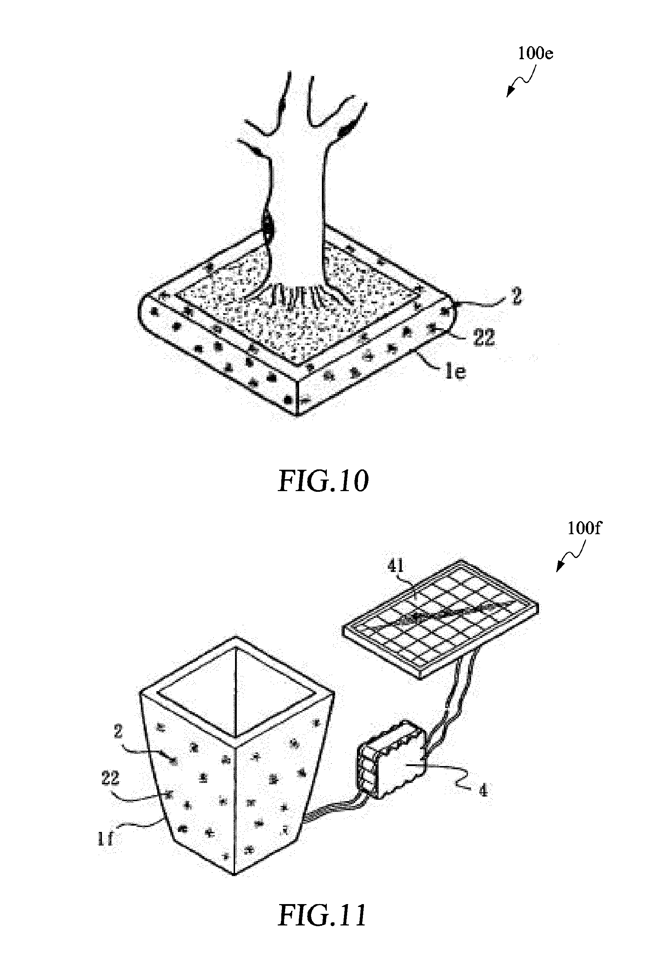

A lighting device with covering body 100e of the present invention is shown in Fig. 10. The eighth embodiment is an application embodiment by altering the first embodiment (or the second, third, fourth embodiment). In this embodiment, the lighting device with covering body 100e comprises the covering body 1e and the light guiding member 2. The covering body 1e can be made to be a flowerpot. The light guiding member 2 is provided within the covering body 1e with the methods as same as those of the first embodiment (or the second, third, fourth embodiment). The light output terminals 22 are distributed on the surface of the covering body 1e to make the lighting device with covering body 100e be a decoration flowerpot which has the light points distributed on the surface thereon.

### (The ninth embodiment)

A lighting device with covering body 100f of the present invention is shown in Fig. 10. The ninth embodiment is an application embodiment by altering the first embodiment (or the second, third, fourth embodiment). In this embodiment, the lighting device with covering body 100f comprises the covering body 1f and the light guiding member 2. The lighting device with covering body 100f further comprises a solar panel 41 and a storage battery 4 with electrical power storage function. The covering body 1f can be made to be a large-sized flowerpot. The light guiding member 2 is provided within the covering body 1e with the methods as same as those of the first embodiment (or the second, third, fourth embodiment). The light output terminals 22 are distributed on the surface of the covering body 1f to make the surface of the lighting device with covering body 100f has the light-distributed decoration effect.

In this embodiment, the storage battery 4 integrates with a power supply managing unit (not shown). The power supply managing unit can switch the power supply source according to the outside environment. For example, when the sunlight is strong, the energy of the sunlight absorbed by the solar panel 41 is transmitted to be stored in the storage battery 4; When the outside light is not enough, the requirement energy of the light source body 3 is supplied from the storage battery 4; When the power energy stored in storage battery 4 is empty and the outside light is weak, the light source body 3 is electrically connected with a direct current transformed and rectified from an external alternating current. The power source of the lighting device with covering body can be selected form many kinds of the power supply to make the surface of the lighting device with covering body 100f has the light-distributed decoration effect.

### (The tenth embodiment)

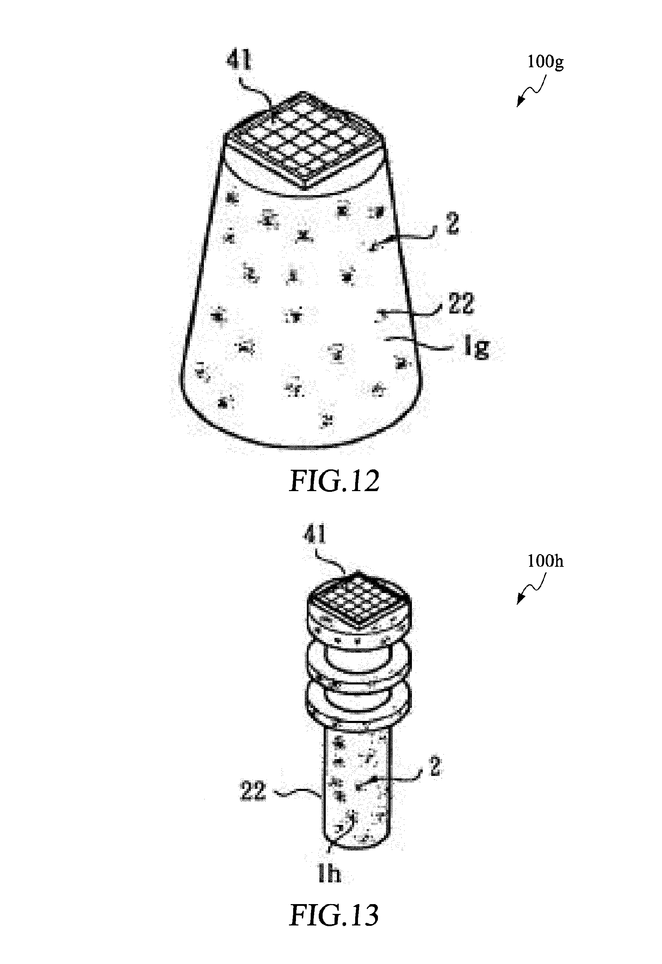

A lighting device with covering body 100g of the present invention is shown in Fig. 12. The tenth embodiment is an application embodiment by altering the first embodiment (or the second, third, fourth embodiment). In this embodiment, the lighting device with covering body 100g comprising the covering body 1g and the light guiding member 2. The covering body 1g is made to be a conic traffic barricade. The light guiding member 2 is provided within the covering body 1g with the methods as same as those of the first embodiment (or the second, third, fourth embodiment). The light output terminals 22 are distributed on the surface of the covering body 1g. A solar panel 41 is provided on the top side of the covering body 1g, and a storage battery is disposed in an interior space within the covering body 1g. When the sunlight is strong, the energy absorbed by the solar panel 41 is transmitted to be stored in the storage battery, so the lighting device with covering body 100g still can generated the distributed light with decoration and warning function on the surface of the covering body 1g even if the sunlight is not enough.

### (The eleventh embodiment)

A lighting device with covering body 100h of the present invention is shown in Fig. 13. The eleventh embodiment is an application embodiment by altering the first embodiment (or the second, third, fourth embodiment). In this embodiment, the lighting device with covering body 100h comprising the covering body 1h and the light guiding member 2. The covering body 1h is made to be a pillar to block the motorcycle and the car at the edge of the sidewalk. The light guiding member 2 is provided within the covering body 1h with the methods as same as those of the first embodiment (or the second, third, fourth embodiment). The light output terminals 22 are distributed on the surface of the covering body 1g. The solar panel 41 is provided on the top side of the covering body 1h, and the storage battery is disposed within the covering body 1h to storage the solar energy absorbed by the solar panel 41. So the lighting device with covering body 100h still can generated the distributed light with decoration and warning function on the surface of the covering body 1h even if the sunlight is not enough.

As can be appreciated from the above embodiments, the lighting device with covering body of the present invention has industry worth which meets the requirement for a patent. The above description should be considered as only the discussion of the preferred embodiments of the present invention. However, a person skilled in the art may make various modifications to the present invention. Those modifications still fall within the spirit and scope defined by the appended claims.

## Claims

1. A lighting device with covering body, comprising:
a covering body having at least one display face; and
a light guiding member having a light input terminal and a light output terminal,
wherein the light guiding member is embedded within the covering body partially or entirely, the light emitted from a light source body is transmitted from the light input terminal to the light output terminal and radiates from the light output terminal on the display face.

2. The lighting device with covering body as claimed in claim 1, wherein the covering body is provided with at least one interior space for disposing the light guiding member and/or the light source body therein.

3. The lighting device with covering body as claimed in claim 1 or 2, wherein the number of light input terminals is plural and the light input terminals are concentratedly arranged within a spot area.

4. The lighting device with covering body as claimed in any of the preceding claims, wherein the number of light output terminals is plural and the light output terminals are arranged to form a symbol or a pattern.

5. The lighting device with covering body as claimed in any of the preceding claims, wherein the light source body is electrically connected with an external alternating current or with a direct current transformed and rectified from an external alternating current.

6. The lighting device with covering body as claimed any of the preceding claims, wherein the light source body is electrically connected with a storage battery integrated with a power supply managing unit to store a direct current provided by an external power source and to output the energy while the direct current is breaking off.

7. The lighting device with covering body as claimed in claim 6, further comprising a solar panel connected with the power supply managing unit.

8. The lighting device with covering body as claimed any of the preceding claims, further comprising a light cover provided on an outer side of the light source body.

9. The lighting device with covering body as claimed any of the preceding claims, wherein the covering body is made of an inflexible hard material.

10. The lighting device with covering body as claimed any of the preceding claims, wherein the light guiding member is provided between the light input terminal and the light output terminal with an optical fiber.

11. A lighting device with covering body, comprising:
a covering body having at least one display face; and
a light guiding member having a light input terminal and a light output terminal,
wherein the light guiding member is embedded within the covering body partially or entirely, the light emitted from a light source body is transmitted from the light input terminal to the light output terminal and radiates from the light output terminal on the display face, and the light guiding member and/or the light source body are/is supported by a support member disposed within the covering body partially or entirely.

12. The lighting device with covering body as claimed in claim 11, wherein the covering body is provided with at least one interior space for disposing the light guiding member, the light source body, and the support member therein.

13. The lighting device with covering body as claimed in claim 11 or 12, wherein the light source electrically connects with a storage battery integrated with a power supply managing unit to store a direct current provided by an external power source and to output the energy while the direct current is breaking off.

14. The lighting device with covering body as claimed in any of the preceding claims 11 to 13, wherein the number of the light output terminals is plural and the light output terminals are arranged to form a symbol or a pattern.

15. The lighting device with covering body as claimed in any of the preceding claims 11 to 14, wherein the number of the light input terminals is plural and the light input terminals are concentratedly arranged within a spot area.
